# EUROPEAN PATENT APPLICATION

(11) **EP 3 229 420 A1**
(43) Date of publication of application: **11.10.2017**
(21) Application number: 16856761.8
(22) Date of filing: 31.08.2016
(51) Int. Cl.: H04L 12/741

(54) **METHOD FOR ESTABLISHING PERSISTENT CONNECTION BETWEEN MULTIPLE SMART DEVICES AND SERVER, AND SMART DEVICE**

(30) Priority: 22.10.2015 CN 201510689036
(71) Applicant: Phicomm (Shanghai) Co., Ltd., Shanghai 201616 (CN)
(72) Inventor: ZHANG, Wei, Shanghai 201616 (CN)
(74) Representative: Sun, Yiming
(86) International application number: PCT/CN2016/097740
(87) International publication number: WO 2017/067327

(57) **Abstract**

The present invention discloses a long connection method between a plurality of smart devices and a server, and a smart device. The method includes: determining a master device, the master device being connected to a routing device and a plurality of slave devices; receiving, by the master device, first information sent by each slave devices and/or second information generated in real time by any smart device, and forwarding all first information and/or the second information to a server via a routing device; receiving, by the master device, connection-related third information and/or interaction-related fourth information fed back by the server; parsing the third information and/or the fourth information, and determining a sending target of the server according to the IP addresses in the third information and/or the fourth information; and transmitting, by the master device, connection information to a corresponding smart device, and/or retaining, by the master device, the fourth information or transmitting the fourth information to a corresponding slave device to execute an operation instruction of the fourth information. According to the present invention, the number of information packets received by the server may be reduced, such that the workload and bandwidth requirements on the server may be lowered.

## Description

### TECHNICAL FIELD

The present invention relates to the communication field, and in particular, to a long connection method between a plurality of smart devices and a server, and a smart device thereof.

### BACKGROUND

With the development of network, science and technology, smart home devices are becoming popular. Most home use a plurality of smart devices. These smart devices are connected to a server via network, and may periodically conduct a heartbeat communication with the server.

Generally, no communication is conducted between the common smart devices. The common smart devices are individuals and are each connected to the server for message communication. In this case, each smart device needs to keep a long connection with the server to ensure that the communication link is normal. This causes a problem that the server needs to keep the heartbeat communication with hundreds of thousands or even millions of smart devices, and the server needs to transceive masses of heartbeat messages. As a result, a great workload in data processing may be caused to the server, and thus an extremely high bandwidth is required.

### SUMMARY

The major technical problem to be solved by the present invention is to provide a long connection method between a plurality of smart devices and a server, and a smart device, to reduce the number of messages received by the server, mitigate the workload of the server and meanwhile lower the bandwidth requirement of the server.

To solve the above technical problem, one technical solution employed by the present invention is: a long connection method between a plurality of smart devices and a server. The method includes: determining a master device, the master device being connected to a routing device and a plurality of slave devices; transmitting, by the master device, a plurality of pieces of first information and/or second information to the routing device, and forwarding the first information and/or the second information via the routing device to the server for connection acknowledgment and communication between the smart devices and the server, wherein the first information at least includes an IP address of each smart device and heartbeat message of each smart device, and the second information at least includes an IP address of a smart device generating the second information and communication information generated by the smart device; receiving, by the master device, third information and/or fourth information fed back from the server, wherein the third information at least includes IP addresses of the master device and the slave device, and connection acknowledgment information between the server and each smart device, and the fourth information at least includes the IP address of the master device or the slave device and corresponding operation instruction; parsing the third information and/or the fourth information, and determining a sending target of the server according to the IP addresses in the third information and/or the fourth information; and retaining, by the master device, the connection information according to the sending target of the server and transmitting the connection information to a corresponding slave device, and/or retaining the fourth information according to the sending target of the server or transmitting the fourth information to a corresponding slave device to execute the operation instruction of the fourth information.

To solve the above technical solution, the technical solution employed by the present invention is: a smart device. The smart device includes: a first transceiving module, configured to transmit a plurality of pieces of first information and/or second information to the routing device, and forwarding the first information and/or the second information to the server for connection acknowledgment and communication between the smart device and the slave devices, and the server, wherein the first information at least includes IP addresses and heartbeat messages of the smart device and the slave devices, and the second information at least includes an IP address of the smart device generating the second information in real time or IP addresses of the slave devices and generated communication information; a second transceiving module, configured to receive third information and/or fourth information fed back from the server, wherein the third information at least includes IP addresses of the master device and the slave device, and connection information acknowledged between the server, and the smart devices and the slave devices, and the fourth information at least includes IP addresses of the smart devices or IP address of the slave devices and corresponding operation instruction; a parsing module, configured to parse the third information and/or the fourth information, and determine a sending target of the server according to the IP addresses in the third information and/or the fourth information; and an executing module, configured to retain the connection information according to the determined sending target of the server and transmit the connection information to a corresponding slave device, and/or retain the fourth information according to the determined sending target of the server or transmit the fourth information to a corresponding slave device to execute the operation instruction of the fourth information.

Different from the prior art, with the long connection method between a plurality of smart devices and a server according to the present invention, a master device and a plurality of slave device clusters are connected to a routing device, each slave device transmits heartbeat message thereof and communication information with the server to the master device, the master device uniformly sends the information to the server, the server sends instruction information of each slave device to the master device, and the master device forwards the instruction information to the corresponding slave device. The method according to the present invention is capable of reducing the number of information messages received by the server and the workload of the server, and meanwhile lowering the bandwidth requirement of the server.

### BRIEF DESCRIPTION OF THE DRAWINGS

FIG. 1 is a schematic flowchart of a long connection method between a plurality of smart devices and a server according to one embodiment of the present invention;
FIG. 2 is a schematic flowchart of a long connection method between a plurality of smart devices and a server according to another embodiment of the present invention; and
FIG. 3 is a schematic structural diagram of a smart device according to one embodiment of the present invention.

### DETAILED DESCRIPTION

The technical solutions of the present invention are hereinafter described in detail with reference to the specific embodiments. Obviously, the embodiments described herein are merely exemplary ones, but are not all the embodiments. Based on the embodiments of the present invention, all other embodiments derived by persons of ordinary skill in the art without any creative efforts shall fall within the protection scope of the present invention.

In the smart home, various devices (for example, audio and video devices, lighting devices, curtain control devices, air conditioning controlling devices, security systems, digital cinema systems, audio and video servers, video cabinet systems, network-linked appliances and etc.) are connected each other via the Internet of Things technology to provide various functions and means of appliance control, lighting control, telephone remote control, indoor/outdoor remote control, anti-theft and alarming, environment monitoring, heating control, infrared forwarding and programmable timing-based control. Compared with common home, the smart home not only has the traditional dwelling functions, but also implements the functions of architecture, network communication, informational appliance and device automation and provides a comprehensive information communication function, which saves expenditure of various energy consumptions. However, during use of the smart home, all the smart devices need to keep a long connection with a server, and periodically sends heartbeat messages to the server to ensure that the communication link works normally. In addition, the smart devices may also send other information messages to the server. In this case, the server needs to transceiver masses of information messages, the overloaded workload causes performance loss on the server. In addition, each smart device connected to the server requires a higher bandwidth. Therefore, it is necessary to provide a method to address the above defect, so as to prolong life time of the smart devices.

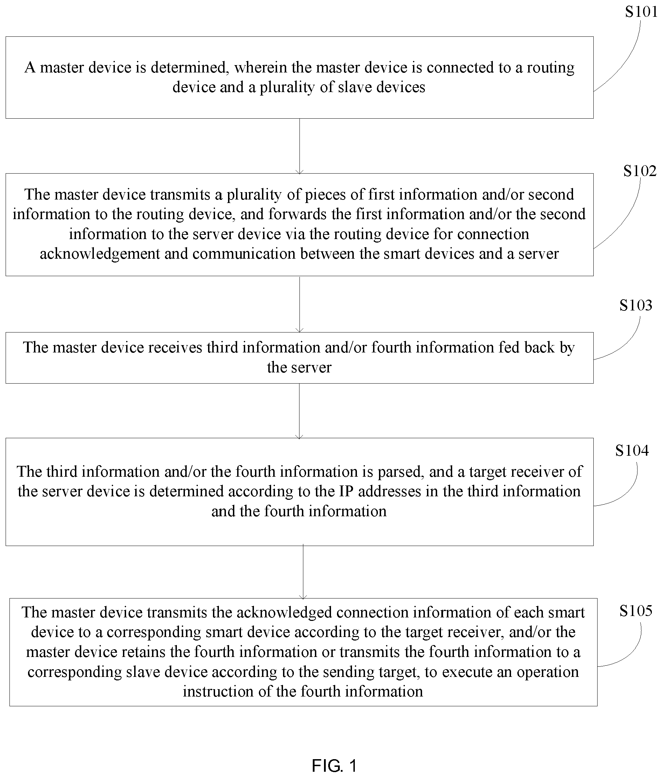

Referring to FIG. 1, FIG. 1 is a schematic flowchart of a long connection method between a plurality of smart devices and a server according to one embodiment of the present invention. The method includes the following steps:
S101: A master device is determined, wherein the master device is connected to a routing device and a plurality of slave devices.

Any smart device in a plurality of smart devices is set as the master device, the master device may be randomly assigned by a user or may be a smart device that is firstly connected to the routing device, and the remaining smart devices except the master device are used as the slave devices. All the slave devices are connected to the master device, and then the master device is connected to a routing device. In this embodiment, the master device and the slave devices are connected to a routing system which is however not the routing device connected between the master device and a server. Then step S102 is performed.

S102: The master device transmits a plurality of pieces of first information and/or second information to the routing device, and forwards the first information and/or the second information via the routing device to the server for connection acknowledgment and communication between the smart devices and the server.

During operation of all the smart devices, the smart devices need to be connected to a server, and perform connection confirmation and information communication with the server. In the prior art, each smart device performs the connection confirmation and information communication with the server, and sends masses of information messages to the server. Therefore, the workload of the server is great, which causes the performance loss of the server. In this embodiment, the smart devices are categorized into a master device and a plurality of slave devices, wherein the slave devices are not connected to the server, and communication information between the slave devices and the server is not directly sent by the slave devices to the server, but is uniformly sent by the master device, so that the server does not require a high network bandwidth in the prior art. The slave devices transmit a first information message to the master device; and the master device acquires first information in the first information message, integrates the acquired first information, first information thereof and IP addresses of the smart devices into the same first information message, and forwards the message via the routing device to the server. The server parses the received message and acknowledges the connections with the smart devices. In this embodiment, the first information is heartbeat communication message between the smart devices and the server, and the server acknowledges the connections with the smart devices by acquiring the heartbeat messages of the smart devices.

When the master device and the slave devices generate the second information to be sent to the server, the slave devices transmit the second information to the master device. The second information at least includes the IP addresses of the smart device generating the second information in real time, and the generated communication information. Once the master device generates the second information or receives the second information from the slave devices, the master device immediately forwards the second information via the routing device to the server.

This embodiment covers three possible cases where the master device independently sends the first information, independently sends the second information and simultaneously sends both the first information and the second information.

S103: The master device receives connection-related third information and/or communication-related fourth information fed back from the server.

If the master device sends the first information to the server in step S102, the server receives the first information, acquires via parsing the heartbeat messages of the smart devices, and sends the third information to the master device to feed back the connections between the server and the smart devices, wherein the third information at least includes IP addresses of the master device and the slave devices, and confirmed connection information between the server and each smart device.

If the master device sends the second information to the server, the server parses and processes the second information to generate the fourth information, and forwards the fourth information to the master device via the routing device to feed back the communication information between the server and the smart device, wherein the fourth information at least includes IP addresses of the smart devices corresponding to the second information and the information feeding back the communication information.

If the master device simultaneously sends the first information and the second information to the server, the third information and the fourth information may be simultaneously received.

S104: The third information and/or the fourth information is parsed, and a sending target of the server is determined according to the IP addresses in the third information and/or the fourth information.

The master device receives and parses the third information message to obtain the third information feeding back the heartbeat message of the smart devices; and the master device determines the sending target of the server of the fourth information according to the IP address in the fourth information.

S105: The master device transmits the confirmed connection information of each smart device to a corresponding smart device according to the sending target of the server, and/or the master device retains the fourth information or transmits the fourth information to a corresponding slave device according to the sending target of the server, to execute an operation instruction of the fourth information.

The master device retains the part information feeding back the heartbeat message of the master device according to the IP address in the third information, and transmits the information feeding back the heartbeat messages of the slave devices to corresponding slave devices according to the IP addresses.

The master device retains the fourth information or transmits the fourth information to a corresponding slave device according to the IP address in the fourth information, to execute the operation instruction in the fourth information.

When the server simultaneously sends the third information and the fourth information, the master device meanwhile receives and processes the third information and the fourth information based on the above described manner.

Different from the prior art, with the long connection method between a plurality of smart devices and a server according to the present invention, a master device and a plurality of slave device clusters are connected to a routing device, each slave device transmits heartbeat message thereof and communication information with the server to the master device, the master device uniformly sends the information to the server, the server sends instruction information of each slave device to the master device, and the master device forwards the instruction information to the corresponding slave devices. The method according to the present invention is capable of reducing the number of information messages received by the server and the workload of the server, and meanwhile lowering the bandwidth requirement of the server.

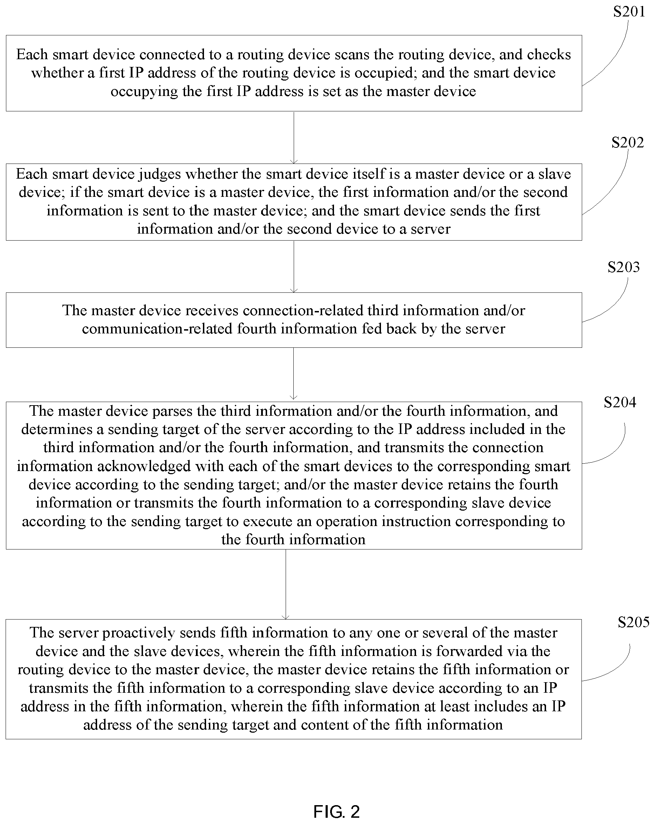

Referring to FIG. 2, FIG. 2 is a schematic flowchart of a long connection method between a plurality of smart devices and a server according to one embodiment of the present invention. The method includes the following steps:
S201: Each smart device connected to a routing device scans the routing device, and checks whether a first IP address of the routing device is occupied; and the smart device occupying the first IP address is set as a master device.

When each smart device in smart house is connected to a routing device, each smart device checks whether a first IP address of the routing device is occupied. If the first IP address is not occupied, the smart device currently connecting to the routing device is used as a master device, and the first IP address is assigned to the master device; and if the first IP address is already occupied, it indicates that a master device already exists in the routing network, and the currently connected smart device is used as a slave device, and an unoccupied IP address except the first IP address is assigned to the slave device. The master device records the IP address of every slave device accessing the routing system, and the slave device meanwhile records the first IP address of the master device. In this embodiment, the master device and the slave devices are connected to a routing system which is however not the routing device connected between the master device and the server. Then step S202 is performed.

S202: Each smart device identifies whether the smart device itself is a master device or a slave device; if the smart device is a master device, the first information and/or the second information is sent to the master device; and the master device sends the first information and/or the second device to the server.

During operation of each smart device, heartbeat message and communication information between the smart device and the server are generated. The heartbeat message is an acknowledgement information between the smart devices and the server. A smart device may not be used within a specific period of time. In this case, operation information may not be generated. However, the heartbeat message still needs to be periodically sent to the server to confirm the connection between the smart device and the server. In addition, when the settings of any smart device change, the communication information needs to be sent to the server to notify the server of the change of the settings of the smart device.

The smart device firstly judges whether the smart device itself is the master device, which may be specifically practiced by judging whether the IP address thereof is the first IP address. If the smart device is judged as a slave device, all the slave devices sends the generated heartbeat messages to the master device, the master device receives the heartbeat messages and integrates the heartbeat messages of all the smart devices and the IP addresses of the corresponding smart devices into the first information, and then forwards the first information to the server via the routing device. Since each smart device sends the heartbeat message to the same server, the frequency of sending heartbeat message for the smart devices is set to be synchronized. Further, when any slave device generates communication information between the slave device and the server, the slave device transmits the interaction information to the master device in real time, and the master device integrates the communication information and the IP address of the slave device sending the communication information into the second information. When the master device generates communication information, the master device integrates the communication information and the first IP address into the second information, and forwards the second information to the server via the routing device.

S203: The master device receives third information and/or fourth information fed back from the server.

S204: The master device parses the third information and/or the fourth information, and determines a sending target of the server according to the IP address included in the third information and/or the fourth information, and transmits the connection confirmation information with each smart device to the corresponding smart device according to the sending target of the server; and/or the master device retains the fourth information or transmits the fourth information to a corresponding slave device according to the sending target of the server to execute an operation instruction of the fourth information.

Step S203 and step S204 are similar to or even the same as steps S102, S103 and S205 in the first embodiment, which are thus not described herein any further.

S205: The server proactively sends at least one piece of fifth information to any one or several of the master devices and the slave devices, wherein the fifth information is forwarded to the master device via the routing device; and the master device retains the fifth information or transmits the fifth information to a corresponding slave device according to the IP address in the fifth information.

When feeding back the information sent by the smart devices, the server may also proactively send the fifth information to any one or several of the smart devices. The fifth information may be the information notified to the smart devices after the server changes the settings, and the information notified to the smart devices after the server is updated. Upon receiving the fifth information, the master device processes the fifth information based on the same manners of processing the third information and the fourth information as described above, which is thus not described herein any further.

Different from the prior art, with the long connection method between a plurality of smart devices and a server according to the present invention, a master device and a plurality of slave device clusters are connected to a routing device, each slave device transmits heartbeat message thereof and communication information with the server to the master device, the master device uniformly sends the information to the server, the server sends instruction information of each slave device to the master device, and the master device forwards the instruction information to the corresponding slave devices. The method according to the present invention is capable of reducing the number of information messages received by the server and the workload of the server and meanwhile lowering the bandwidth requirement of the server.

In other embodiments, the user assigns one of all smart devices accessing the routing device as the master device and the remaining smart devices as slave devices. The smart device assigned as the master device is assigned with the first IP address, and the remaining slave devices are assigned with IP addresses except the first IP address.

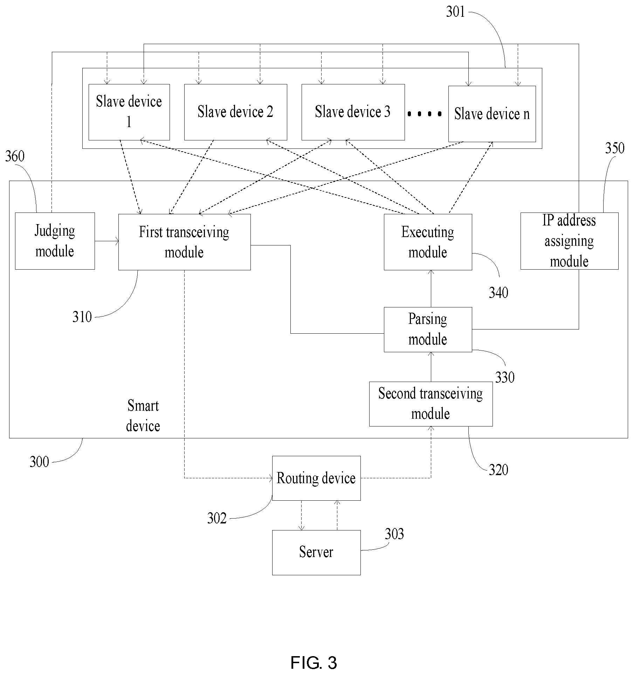

Referring to FIG. 3, FIG. 3 is a schematic structural diagram of a smart device 300 according to one embodiment of the present invention. The smart device 300 includes: a first transceiving module 310, a second transceiving module 320, a parsing module 330 and an executing module 340.

The first transceiving module 310 receives a first information message transmitted by a slave device 301 connected to the smart device 300, acquires the first information in every first information message, integrates the acquired first information, the first information of the smart device and IP addresses of the smart device 300 and the slave devices 301 into the same first information message, and forwards the first information message via a routing device 302 to a server 303. In this embodiment, the first information is heartbeat communication message between the smart device 300 and the slave devices 301 and the server 303, and the server 303 confirms the connections between the smart device 300 and the slave devices 301 by acquiring the heartbeat message of the smart devices. In this embodiment, the master device and the slave devices are connected to a routing system which is however not the routing device connected between the master device and the server.

When the smart device 300 and the slave devices 301 generate the second information to be sent to the server 303, the slave devices 301 transmit the second information to the smart device 300. The second information at least includes the IP addresses of the smart device 300 or the slave devices 301 generating the second information in real time, and the generated communication information. When the smart device 300 generates the second information or receives the second information from the slave devices 301, the smart device 300 immediately forwards the second information via the routing device 302 to the server 303.

This embodiment covers three possible cases where the smart device 300 device independently sends the first information, independently sends the second information, and simultaneously sends both the first information and the second information.

When the smart device 300 sends the first information to the server 303, the second transceiving module 320 receives third information indicating heartbeat connection message from the server 303, wherein the third information at least includes the IP addresses of the smart device 300 and the slave devices 301, and the connection information acknowledged between the server 303 and the smart device 300 and the slave devices 301. When the smart device 300 sends the second information to the server 303, the second transceiving module 320 receives fourth information indicating communication information from the server 303, wherein the fourth information at least includes the IP addresses of the smart device 300 and the slave devices 301 corresponding to the second information, and the information indicating information communication. If the smart device 300 simultaneously sends the first information and the second information to the server 303, the third information and the fourth information may be simultaneously received.

When the second transceiving module 320 receives the third information, the parsing module 330 parses the third information message to obtain the third information indicating heartbeat message of the devices, and the executing module 340 retains the third information indicating the heartbeat message of the smart device 300 according to the IP address included in the third information, and transmits the information indicating the heartbeat message of the slave devices 301 in the third information to the corresponding slave device 301 according to the IP address. When the second transceiving module 320 receives the fourth information, the parsing module 330 parses the fourth information message; the executing module 340 judges a sending target of the server of the fourth information according to the IP address in the fourth information; and the smart device 300 retains the fourth information or transmits the fourth information to the corresponding slave device 301 to execute an operation instruction of the fourth information. When the server 303 simultaneously sends the third information and the fourth information, the master device 300 meanwhile receives and processes the third information and the fourth information based on the above described manner.

Further, the smart device 300 further includes an IP address assigning module 350, and assigns a first IP address to the smart device 300 and assigns any IP address except the first IP address to the slave devices 302 when the smart device 300 establishes a connection with the routing device 302 and the plurality of slave devices 301. Each slave device 302 reports the IP address assigned by the IP address assigning module 350 to the smart device 300, and meanwhile records the first IP address of the smart device 300. In this way, the slave devices 301 send the first information and the second information to the smart device 300 according to the first IP address, and the smart device 300 may also send the third information and the fourth information returned by the server 303 to the corresponding slave devices 301 according to the IP addresses.

The smart device 300 further includes a judging module, configured to judge whether the device occupying the IP address is the smart device 300 or the slave device 301 according to the IP address of the device. If the device is a slave device 301, the first information and/or the second information generated by the slave device 301 is sent to the smart device 300; otherwise, the first information formed by the heartbeat message of the smart device and the slave devices 301 and/or the second information formed by any one of the smart device 300 and the slave devices 301 are forwarded to the server 303 via the routing device 302.

Different from the prior art, with the smart device according to the present invention, the master device and a plurality of slave device clusters are connected to a routing device, each slave device transmits heartbeat message thereof and communication information with a server to the smart device, the smart device uniformly sends the information to the server, the server sends instruction information of each slave device to the smart device, and the smart device forwards the instruction information to the corresponding slave devices. The method according to the present invention is capable of reducing the number of information messages received by the server and the workload of the server and meanwhile lowering the bandwidth requirement of the server.

Described above are exemplary embodiments of the present invention, but are not intended to limit the scope of the present invention. Any equivalent structure or equivalent process variation made based on the specification and drawings of the present invention, which is directly or indirectly applied in other related technical fields, fall within the scope of the present invention.

## Claims

1. A long connection method between a plurality of smart devices and a server, the smart devices comprising at least one master device and at least one slave device, the method comprising:
determining a master device, the master being connected to a routing device and a plurality of slave devices;
transmitting, by the master device, a plurality of first information and/or second information to the routing device, and forwarding the first information and/or the second information via the routing device to the server for connection acknowledgement and communication between the smart devices and the server, wherein the first information at least comprises an IP address of each smart device and heartbeat message of each smart device, and the second information at least comprises an IP address of a smart device generating the second information and communication information generated by the smart device;
receiving, by the master device, third information and/or fourth information fed back by the server, wherein the third information at least comprises IP addresses of the master device and the slave device, and connection information acknowledged between the server and each smart device, and the fourth information at least comprises IP addresses of the master device or the slave device and an operation instruction corresponding to the fourth information;
parsing the third information and/or the fourth information, and determining a sending target of the server according to the IP addresses in the third information and/or the fourth information; and
retaining, by the master device, the connection information according to the sending target of the server and transmitting the connection information to a corresponding slave device, and/or retaining the fourth information according to the sending target of the server or transmitting the fourth information to the corresponding slave device to execute the operation instruction of the fourth information.

2. The long connection method between a plurality of smart devices and a server according to claim 1, wherein in the step of determining a master device, the smart device that is firstly connected to the routing device is used as the master device, and the smart devices that are later connected to the routing device are used as the slave devices.

3. The long connection method between a plurality of smart devices and a server according to claim 2, wherein in the step of using the smart device that is firstly connected to the routing device as the master device, and using the smart devices that are later connected to the routing device as the slave devices, each smart device that is connected to the routing device scans the routing device and checks whether a first IP of the routing device is occupied; if the first IP address of the routing device is not occupied, the smart device is used as the master device and occupies the first IP address; and otherwise, the smart device is used as the slave device, and occupies any IP address except the first IP address, and each slave device records the first IP address and reports the occupied IP address to the master device.

4. The long connection method between a plurality of smart devices and a server according to claim 3, wherein prior to the step of forwarding the first information and/or the second information via the routing device to the server, each smart device judges whether the smart device itself is a master device or a slave device according to the occupied IP address; if the smart device is a slave device, the first information and/or the second information is transmitted to the master device; and otherwise, the first information and/or the second information is transmitted to the routing device.

5. The long connection method between a plurality of smart devices and a server according to claim 4, wherein in the step of forwarding, by the master device, the first information to the server via the routing device, the master device receives the heartbeat message transmitted from the slave device, and forms the heartbeat message of the master device and all the slave devices and the corresponding IP addresses into the first information, and forwards the first information to the server via the routing device, to acknowledge that the master device and each slave device retains the connection with the server.

6. The long connection method between a plurality of smart devices and a server according to claim 5, wherein the communication information between each slave device and the server is packaged to generate the second information and the second information is transmitted to the master device in real time, the master device makes a response to the received second information and forwards the second information to the server via the routing device, when the master device communicates with the server, the communication information is packaged to generate the second information and to be forwarded to the server via the routing device.

7. The long connection method between a plurality of smart devices and a server according to claim 1, further comprising:
proactively sending, by the server, at least one fifth information to any one or several of the master device and the slave devices, wherein the fifth information is forwarded to the master device via the routing device, the master device retains the fifth information or transmits the fifth information to a corresponding slave device according to the IP address in the fifth information, and the fifth information at least comprises the IP address of the sending target of the server and content of the fifth information.

8. A smart device, configured to be connected to a server and a plurality of slave devices, the smart device comprising:
a first transceiving module, configured to transmit a plurality of first information and/or second information to the routing device, and forward the first information and/or the second information to the server via the routing device for connection acknowledgement and communication between the smart device, the slave devices, and the server, wherein the first information at least comprises IP addresses and heartbeat message of the smart device and the slave devices, and the second information at least comprises an IP address of the smart device generating the second information in real time or IP addresses of the slave devices and the generated communication information;
a second transceiving module, configured to receive third information and/or fourth information fed back by the server, wherein the third information at least comprises IP address of the smart device and the slave device, and connection information acknowledged between the server, the smart devices and the slave devices, and the fourth information at least comprises IP address of the smart device or IP addresses of the slave devices and a corresponding operation instruction;
a parsing module, configured to parse the third information and/or the fourth information, and determine a sending target of the server according to the IP addresses in the third information and/or the fourth information; and
an executing module, configured to retain the connection information according to the determined sending target of the server and transmit the connection information to a corresponding slave device, and/or retain the fourth information according to the determined sending target of the server or transmit the fourth information to a corresponding slave device to execute the operation instruction of the fourth information.

9. The smart device according to claim 8, further comprising:
an IP address assigning module, configured to, when the smart device is connected to the server and the plurality of slave devices, assign a first IP address to the smart device, and assign any IP address except the first IP address to the slave devices, wherein each slave device records the first IP address and reports the occupied IP address to the smart device.

10. The smart device according to claim 8, further comprising:
a judging module, configured to, before the first transceiving module sends the first information and/or the second information, judge whether the smart device and the slave devices themselves are the smart device or the slave devices according to the occupied IP address; and send the first information and/or the second information to the smart device in case of the salve devices; and forward the first information and/or the second information via the routing device to the server in case of the smart device.
